(19) Europäisches Patentamt / European Patent Office / Office européen des brevets

(11) **EP 2 098 699 B1**

(12) **EUROPEAN PATENT SPECIFICATION**

(45) Date of publication and mention of the grant of the patent:
**07.05.2014 Bulletin 2014/19**

(51) Int Cl.:
*F01N 3/08* (2006.01)     *F01N 3/24* (2006.01)
*B01D 53/94* (2006.01)     *F01N 13/02* (2010.01)

(21) Application number: **07850974.2**

(22) Date of filing: **20.12.2007**

(86) International application number:
**PCT/JP2007/074539**

(87) International publication number:
**WO 2008/081738 (10.07.2008 Gazette 2008/28)**

(54) **EXHAUST GAS PURIFYING APPARATUS FOR INTERNAL COMBUSTION ENGINE**

ABGASREINIGUNGSVORRICHTUNG FÜR BRENNKRAFTMOTOR

APPAREIL DE PURIFICATION DE GAZ D'ÉCHAPPEMENT POUR MOTEUR THERMIQUE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **28.12.2006 JP 2006355741**

(43) Date of publication of application:
**09.09.2009 Bulletin 2009/37**

(73) Proprietor: **TOYOTA JIDOSHA KABUSHIKI KAISHA**
**Toyota-shi, Aichi-ken, 471-8571 (JP)**

(72) Inventors:
• **HIRATA, Hirohito**
**Toyota-shi, Aichi-ken, 471-8571 (JP)**
• **IBE, Masaya**
**Toyota-shi, Aichi-ken, 471-8571 (JP)**
• **OSAKI, Mayuko**
**Toyota-shi, Aichi-ken, 471-8571 (JP)**
• **KAMADA, Masaya**
**Toyota-shi, Aichi-ken, 471-8571 (JP)**

(74) Representative: **Jackson, Martin Peter**
**J A Kemp**
**14 South Square**
**Gray's Inn**
**London WC1R 5JJ (GB)**

(56) References cited:
EP-A2- 0 846 491     EP-A2- 1 712 752
JP-A- 06 212 961     JP-A- 10 169 434
JP-A- 2003 175 318     JP-B- 06 016 818
US-A1- 2005 220 679     US-A1- 2006 188 416

## Description

### Technical Field

The present invention relates to an exhaust emission control apparatus for an internal combustion engine.

### Background Art

It is known that a conventional exhaust emission control apparatus disclosed, for instance, in JP-A-2002-89246 includes an NOx Storage-Reduction catalyst (hereinafter referred to as an "NSR catalyst"). More specifically, the NSR catalyst comprises a catalyst function which purifies nitrogen oxide (NOx) and hydrocarbons (HC) contained in the combustion gas exhausted in the internal combustion engine, and a storage function which stores NOx in the catalyst. Before the catalyst activates, such as when there is a cold startup of the internal combustion engine, or while the exhaust gas is lean, and when the reducing agent is in short supply, NOx may be emitted into the atmosphere without being purified in the catalyst. NSR catalyst is capable of storing NOx in the catalyst, and performing a purifying treatment by reacting the stored NOx and reducing agents such as HC under a situation where the catalyst has been activated and rich or stoichiometric driving is performed.

Moreover, during a cold startup operation of the internal combustion engine in which the NSR catalyst does not reach its activation temperature, the above mentioned storage reaction may not occur with a high degree of efficiency because oxidation reaction of NOx is not activated. In the above described conventional system, therefore, it is decided to add ozone to exhaust gas. NOx reacts with ozone in the gas-phase. Therefore, the system can effectively oxidize NOx even before the catalyst is fully activated so as to increase the NOx storage amount.

Patent Document 1: JP-A-2002-89246
Patent Document 2: JP-A-6-185343
Patent Document 3: JP-A-10-169434

EP 17 12752 describes an upstream catalyst that removes $NO_x$ and a downstream catalyst removing an HC compound. Ozone supply is located between the upstream and the downstream catalysts.

### Disclosure of Invention

### Problem to be Solved by the Invention

NOx stored in the catalyst is decomposed to $N_2$, $H_2O$, $CO_2$, and others by reducing agents in the exhaust gas such as HC or CO. During stoichiometric operation, therefore, the reducing agent for reducing the stored NOx may be in short supply, thereby NOx purification may not be performed effectively.

The present invention has been made to solve the above problem. One object of the present invention is to provide an exhaust emission control apparatus for an internal combustion engine that is capable of improving the NOx purification performance.

### Means for Solving the Problem

A first aspect of the present invention is an exhaust emission control apparatus being placed in an exhaust path of an internal combustion engine, according to claim 1.

A second aspect of the present invention is the exhaust emission control apparatus according to the first aspect, wherein the NOx retention material is separated from the catalyst, and
wherein the NOx retention material is positioned upstream from the catalyst.

A third aspect of the present invention is the exhaust emission control apparatus according to the first aspect, wherein the NOx retention material is combined with the catalyst.

A fourth aspect of the present invention is the exhaust emission control apparatus according to any one of the first to the third aspects, further comprising:

control means for controlling the ozone injection means so that a molar quantity of ozone to be injected into the exhaust gas becomes greater than a molar quantity of nitrogen monoxide contained in the exhaust gas.

A fifth aspect of the present invention is the exhaust emission control apparatus according to the fourth aspect, wherein the control means controls the ozone injection means so that the molar quantity of ozone to be injected into the exhaust gas becomes at least two times the molar quantity of nitrogen monoxide contained in the exhaust gas

**Advantages of the Invention**

According to the first aspect of the present invention, an HC adsorbent which adsorbs HC is placed in an exhaust path of an internal combustion engine. The HC adsorbent is prepared so that the adsorbed HC might be desorbed when the NOx being stored by the NOx retention material reaches its desorbed temperature. Therefore, the present invention can make the NOx desorbed from the NOx retention material along with the HC desorbed from the HC adsorbent to react with the catalyst so as to be purified, thereby preventing the reducing agents from being in short so as to improve the NOx purification performance.

Furthermore, ozone is introduced upstream from the NOx retention material. Therefore, the present invention makes it possible to prevent ozone from reacting with HC which is adsorbed into the HC adsorbent, thereby improving the oxidation efficiency of NOx.

It is thought that the storage element which is supported by the NOx retention material could be a catalyst poison for a noble metal of the catalyst. According to the second aspect of the present invention, since the NOx retention material is separated from the catalyst, it is possible to enhance the activation of the catalyst. Furthermore, since the catalyst is positioned downstream from the NOx retention material, it is possible to purify NOx, which has not been stored by the NOx retention material, in the catalyst after a certain level of catalyst activation has been reached. Therefore, this makes it possible to improve the NOx purification performance.

According to the third aspect of the present invention, the NOx retention material is combined with the catalyst. Therefore, this makes it possible to make the desorbed NOx react in the catalyst with a high degree of efficiency. Furthermore, the number of parts is reduced by combining them into a single unit. Therefore, this makes it possible to save on production costs.

**Brief Description of Drawings**

Fig. 1 is a diagram illustrating the hardware configuration of a first example.
Fig. 2 is a diagram showing an NOx storage reaction.
Fig. 3 is a diagram showing an NOx reduction reaction.
Fig. 4 is a diagram illustrating the hardware configuration of the experiment of the present evaluation test.
Fig. 5 is a cross-section diagram illustrating the inside of the catalyst test piece 200 of the present experiment.
Fig. 6 is a graph illustrating the purification efficiencies for a few kinds of components in the first and the second experiments.
Fig. 7 is a diagram illustrating the hardware configuration of the second example.
Fig. 8 is a diagram illustrating an internal configuration of an exhaust purification catalyst 60 which is able to be applied as modifications of the exhaust purification catalyst 42.
Fig. 9 is a diagram illustrating the hardware configuration of the experiment of the present evaluation test.
Fig. 10 is a cross-section diagram illustrating the inside of the catalyst test pieces 300, 310 of the present experiment.
Fig. 11 is a graph illustrating the purification efficiencies for a few kinds of components according to the first and the second experiments.

**Description of Reference characters**

| | |
|---|---|
| 10 | exhaust emission control apparatus |
| 12 | internal combustion engine (engine) |
| 14 | exhaust path |
| 20 | exhaust purification catalyst |
| 30 | ozone supply device |
| 32 | air inlet |
| 34 | ozone injection orifice |
| 40 | exhaust emission control apparatus |
| 42 | exhaust purification catalyst |
| 44 | NSR catalyst |

| 46 | HC adsorbent |
| 50 | ECU(Electronic Control Unit) |
| 60 | exhaust purification catalyst |
| 62 | HC adsorbent |
| 64 | NOx retention material |
| 66 | three-way catalyst |
| 100 | model gas generator |
| 102 | gas cylinders |
| 110,112 | exhaust gas analyzer |
| 114 | ozone analyzer |
| 120 | ozone generator |
| 122 | oxygen cylinder |
| 124,128,130 | flow rate control unit |
| 126 | ozone analyzer |
| 200 | catalyst test piece |
| 202 | quartz tube |
| 204,206 | catalyst sample |
| 300,310 | catalyst test piece |
| 302,312 | quartz tube |
| 304,314,316 | catalyst sample |

**Best Mode for Carrying Out the Invention**

Aspects of the present invention will now be described with reference to the accompanying drawings. Like elements in the drawings are designated by the same reference numerals and will not be redundantly described.

Configuration

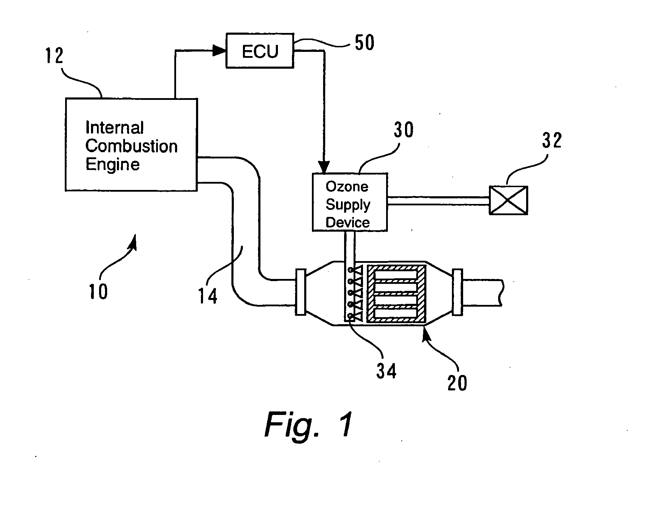

Fig. 1 is a diagram illustrating the hardware configuration of a first example: As shown in Fig. 1, an exhaust emission control apparatus 10 of the present embodiment is installed in an internal combustion engine (hereinafter referred to as an "engine") 12.

An exhaust path 14 is attached to an exhaust side of the engine 12. An exhaust purification catalyst 20 is installed in the exhaust path 14. The exhaust purification catalyst 20 supports platinum (Pt) that is a noble metal and barium carbonate ($BaCO_3$) on a ceramic carrier. Pt functions as an active site that activates the oxidation reaction of CO, HC, and others or the reduction reaction of NOx. Further, $BaCO_3$ functions as an NOx storage substance which stores NOx in the form of nitrate salt.

Zeolite based ZSM-5 is supported by a ceramic carrier of the exhaust purification catalyst 20. ZSM-5 functions as an HC adsorbent that adsorbs HC. The following explanation assumes that the terms "catalyst" refers to a portion of the carrier that supports Pt. Further, it is also assumed that the term "NOx retention material" refers to a portion of the carrier that supports $BaCO_3$. Furthermore, it is also assumed that the term "HC adsorbent" refers to a portion of the carrier that supports ZSM-5.

The exhaust emission control apparatus 10 includes an ozone supply device 30. The ozone supply device 30 includes a system that generates ozone by performing a creeping discharge into oxygen taken from an air inlet 32. The configuration, function, and other characteristics of the ozone supply device 30 will not be described in detail because they are not main parts of the present invention and are well-known.

The ozone supply device 30 includes an ozone injection orifice 34 that injects ozone toward the exhaust purification catalyst 20. The ozone injection orifice 34 is placed so that the injected ozone might be uniformly mixed with the exhaust gas which is streamed into the exhaust purification catalyst 20.

As shown in Fig. 1, the exhaust emission control apparatus 10 includes an ECU (Electronic Control Unit) 50. An output section of the ECU 50 is connected to the ozone supply device 30 described above. An input section of the ECU 50 is connected to various sensors which detect an operating condition and the operating status of the engine 12. In accordance with the various input information, the ECU 50 calculates an injection timing and an injection quantity for ozone and controls the ozone supply device 30.

[Operation]

(NOx Storage Operation Using Ozone)

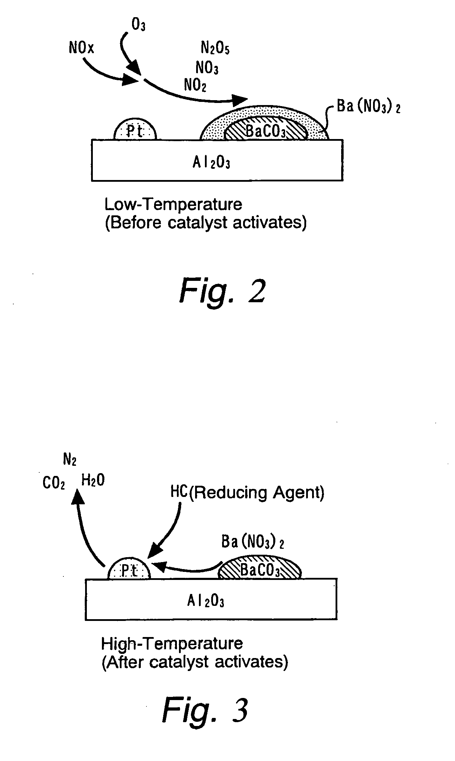

An operation of this aspect will now be described with reference to Figs. 2 and 3. In the exhaust purification catalyst 20, NOx is decomposed to $N_2$, $H_2O$, $CO_2$, and others by reacting with HC or CO. As a result, the NOx contained in the exhaust gas is purified effectively. However, during a cold startup of the engine 12 in which the exhaust purification catalyst 20 is not warmed up until its activation temperature, the NOx contained in the exhaust gas is not purified in the exhaust purification catalyst 20 because it has not activated enough.

In view of the above circumstances, the present example prevents the unpurified NOx from being emitted into the atmosphere by storing them into the exhaust purification catalyst 20. Ozone is injected into the exhaust gas as a means for storing the NOx in the exhaust purification catalyst 20. More specifically, the ozone generated by the ozone supply device 30 is injected from the ozone injection orifice 34 toward the exhaust purification catalyst 20.

Fig. 2 is a diagram showing an NOx storage reaction. More specifically, Fig. 2 is an enlarged view showing the exhaust purification catalyst 20. As shown in Fig. 2, NOx is oxidized by being reacted with ozone in the gas-phase before the exhaust purification catalyst 20 is fully activated, i.e., the catalyst is at a low temperature. More specifically, the following reactions occur.

$$NO + O_3 \rightarrow NO_2 + O_2 \qquad (1)$$

$$NO_2 + O_3 \rightarrow NO_3 + O_2 \qquad (2)$$

$$NO_2 + NO_3 \rightarrow N_2O_5 \qquad (3)$$

$$(NO_2 + NO_3 \leftarrow N_2O_5)$$

The NOx oxidized to $NO_2$, $NO_3$, or $N_2O_5$ is stored in the NOx retention material in the form of nitrate such as $Ba(NO_3)_2$. Thereby, it is possible to store the NOx effectively. Therefore, it is possible to effectively prevent the NOx from being emitted into the atmosphere, even when the exhaust purification catalyst 20 is not fully activated.

Moreover, according to the gas-phase reaction of ozone as shown in the above formulas (1) and (2), the region in which NOx is oxidized is not limited to a region on catalyst. Therefore, for instance, it is possible to support the NOx storage substance and noble metal separately in the exhaust purification catalyst 20. Therefore, the NOx storage substance which could be a catalyst poison for the noble metal can be separated from the noble metal, thus improving the purification efficiency of the catalyst.

According to the aforementioned NOx storage reaction, the forms of $NO_2$, $NO_3$, $N_2O_5$, or $HNO_3$ which is generated when the former nitrogen oxides react with water can be stored. However, there is a limitation of NOx storage amount as for the form of $NO_2$. Therefore, it is possible to dramatically increase the storage amount of NOx if the reaction as shown in the above formula (2) occurs actively so as to convert large amounts of $NO_2$ into $NO_3$.

However, the activation energy necessary to take place the reaction as shown in the above formula (2) is higher than the energy required in the reaction as shown in the above formula (1). Therefore, the reaction of the above formula (1) takes priority over the reaction of the above formula (2). Therefore, all reactions occurring are just the reactions of the above formula (1) so that the final form of oxidized NO becomes $NO_2$ when the molar quantity of ozone contained in the exhaust gas is smaller than the molar quantity of NO.

[0033]    In view of the above circumstances, the injection quantity of ozone is controlled so that the molar quantity of ozone to be injected into the exhaust gas might be greater than the molar quantity of NO contained in the exhaust gas. This make it possible to be oxidized from $NO_2$ to $NO_3$. Therefore, it is possible to increase the storage amount of NOx.

Further, it is preferred that the injection quantity of ozone is controlled so that the molar quantity of ozone to be injected into the exhaust gas might be more than twice the molar quantity of NO contained in the exhaust gas. This makes it possible for most of the NO to be oxidized to $NO_3$. Therefore, it is possible to increase the storage amount of NOx dramatically.

(Reduction Operation of the Stored NOx)

As described above, the ozone is injected toward the exhaust purification catalyst 20. This makes it possible to store the NOx, which is exhausted with a cold startup of the engine 12, effectively. Therefore, it is possible to prevent the NOx from being emitted into the atmosphere.

After the exhaust purification catalyst 20 activates, the stored NOx is purified by reacting with a reducing agent such as HC contained in the exhaust gas. Fig. 3 is a diagram showing an NOx reduction reaction. Specifically, Fig. 3 is an enlarged view showing the exhaust purification catalyst 20. As shown in Fig. 3, the stored NOx is decomposed to $N_2$, $H_2O$, $CO_2$, and others by being reduced with a reducing agent such as HC contained in the exhaust gas after the catalyst activates. Therefore, if the NOx reduction reaction could take place with a high degree of efficiency, this makes it possible to purify the NOx which is stored before the catalyst activates.

However, NOx may be emitted into the atmosphere without being purified in the catalyst during a stoichiometric operation of the internal combustion engine 12 since the reducing agent for purifying the desorbed NOx may be in short supply. In view of the above circumstances, an HC adsorbent is placed into the exhaust purification catalyst 20 in the present example. The HC adsorbent is configured by making the carrier support a zeolite based adsorbent that adsorbs HC at low temperatures and desorbs the HC at high temperatures. Desorption temperature characteristics of the adsorbed HC vary depending on the substance of the adsorbent. The HC adsorbent is prepared so that the desorption start temperature of HC might coincide with the desorption start temperature of NOx which is stored in the exhaust purification catalyst 20.

The HC contained in the exhaust gas is adsorbed by the HC adsorbent during a cold startup of the engine 12. The adsorbed HC is desorbed at the time when desorption of the stored NOx is started after a rise in the temperature of the exhaust purification catalyst 20. Therefore, it is possible to reliably purify the NOx stored before the catalyst activation by additionally supplying HC that functions as a reducing agent during the desorption period of NOx when reducing agents are apt to be in short supply.

The first example which has been described above, assumes that ozone is generated by the ozone supply device 30 and injected toward the exhaust purification catalyst 20 from ozone injection orifice 34. However, the configuration of the ozone supply device 30 is not limited to the above-described one. That is, an ozone generation device may be installed in the exhaust path 14 or the ozone supply device 30 may inject ozone into the exhaust path 14 upstream from the exhaust purification catalyst 20, as long as ozone can be added to the exhaust gas introduced into the exhaust purification catalyst 20.

Furthermore, although $BaCO_3$ is used as an NOx storage substance in the above described first embodiment, the material is not limited to this. For example, alkali metals such as Na, K, Cs and Rb, alkali earth metals such as Ba, Ca and Sr, and rare earth elements such as Y, Ce, La and Pr may be used as needed. Also, the material of the catalyst is not limited to Pt. For example, noble metals such as Rh and Pd may be used as needed. Furthermore, the material of the HC adsorbent is not limited to ZSM-5. For example, various publicly known HC adsorbent may be used as needed.

In the first example, which has been described above, the ozone supply device 30 corresponds to the "ozone supply means"; and the exhaust purification catalyst 20 corresponds to the "catalyst".


Evaluation test


[Configuration of experiment]


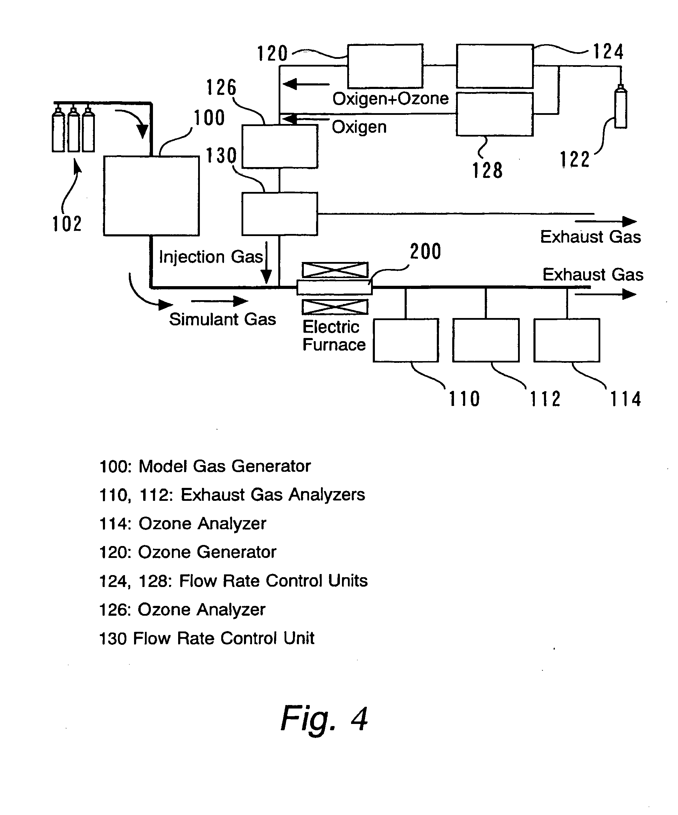

Next, evaluation test for confirming the advantage of the invention showing the first example will now be described with reference to Figs. 4 to 7. Fig. 4 is a diagram illustrating the hardware configuration of the experiment of the present evaluation test. As shown in Fig. 4, the present experiment includes a model gas generator 100. The model gas generator 100 is able to mix the gases which are supplied in a plurality of gas cylinders 102 to create the simulant gas which represents the exhaust gas of the internal combustion engine.

A catalyst test piece 200 is installed a path which is placed downstream from the model gas generator 100. An electric furnace, which controls the temperature of the catalyst test piece 200 to a desired temperature, is installed around the catalyst test piece 200. The configuration of the catalyst test piece 200 will be described in detail below.

Exhaust gas analyzers 110, 112 and an ozone analyzer 114 are attached a path which is placed downstream from the catalyst test piece 200. The simulant gas which is generated by the model gas generator 100 is gone through inside of the catalyst test piece 200 and then it is analyzed its gas components by these analyzers.

Further, the experiment shown in Fig. 4 includes a system in order to inject an injection gas containing ozone. More specifically, the present experiment includes an oxygen cylinder 122. An ozone generator 120 is connected downstream from the oxygen cylinder 122 via a flow rate control unit 124. The ozone generator is a device in order to generate ozone from oxygen which is supplied in the oxygen cylinder 122. The ozone generator 120 is connected upstream from the catalyst test piece 200 via an ozone analyzer 126 and a flow rate control unit 128. Further, the oxygen cylinder 122 is connected upstream from the ozone analyzer 126 directly via a flow rate control unit 130 which is placed separately. According to the aforementioned configuration, it is possible to control the ozone amount and the oxygen amount contained in the injection gas separately.

Following measuring instruments are used for the present evaluation test.
Ozone generator 120; Iwasaki Electric, OP100W
Ozone analyzer 126; Ebara Jitsugyo, EG600
Ozone analyzer 114; Ebara Jitsugyo, EG2001B

Exhaust gas analyzer 110; Horiba, MEXA9100D (HC/CO/NOx measurement)
Exhaust gas analyzer 112: Horiba, VAI-510 ($CO_2$ measurement)

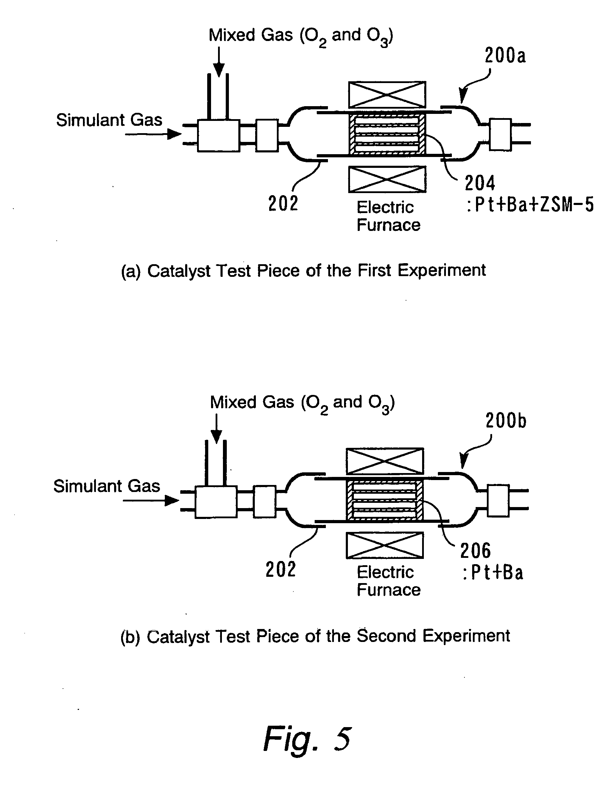

Next, a specific configuration of the catalyst test piece 200 will now be described in detail. Fig. 5 is a cross-sectional view illustrating the inside of the catalyst test piece 200 of the present experiment. According to the present evaluation test, a catalyst test piece 200a was used as the catalyst test piece 200 in a first experiment, and a catalyst test piece 200b was used as the catalyst test piece 200 in a second experiment. Fig. 5(a) is a cross-sectional view illustrating the inside of the catalyst test piece 200a being used in the first experiment. As shown in Fig. 5(a), the catalyst test piece 200a includes a catalyst sample 204, which comprises an HC adsorbing function, an NOx storage function, and a catalyst function, inside of a quartz tube 202. The catalyst sample 204 was created by performing the procedure described below.

(Creating Procedure of Catalyst sample 206)

First, $\gamma$-$Al_2O_3$ was dispersed in ion-exchange water. An aqueous solution of barium acetate was then added in it. The resulting mixture heated to remove water from it, dried at 120 degrees Celsius, and pulverized to powder. The powder was then burned for two hours at 500 degrees Celsius. After burning, the burnt powder was immersed in a solution containing ammonium hydrogen carbonate, and then dried at 250 degree Celsius. As a result of that, barium-supported catalyst was obtained.

Next, the barium-supported catalyst was dispersed in ion-exchange water. An aqueous solution containing dinitro-diammine platinum was then added to support Pt. The resulting mixture was dried, pulverized, and burned for one hour at 450 degrees Celsius. According to this catalyst, the supported quantity of barium was 0.1 mole per 120 g of $\gamma$-$Al_2O_3$, and the supported quantity of Pt was 2 g.

$H^+$ ion of ZSM-5 type zeolite (Si/Al ratio = 40, H-type) was exchanged ion using silver nitrate, dried, and then burned at 450 degrees Celsius to prepare Ag ion-exchange ZSM-5. The Ag ion-exchange ZSM-5 was mixed with $\gamma$-$Al_2O_3$ being supported Pt and Ba to obtain a catalyst. The mixture ratio (ZSM-5 : $Al_2O_3$) was 5:12.

A 30 mm diameter, 50 mm long, 4 mil/400 cpsi cordierite honeycomb was coated with the catalyst being prepared earlier and burned for one hour at 450 degrees Celsius. The coating amount was such that $Al_2O_3$ was coated at a rate of 120 g/L. Therefore, the Ag ion-exchange ZSM-5 would be coated at a rate of 50 g/L.

Meanwhile, Fig. 5(b) is a cross-sectional view illustrating the inside of the catalyst test piece 200b being used in the second experiment. As shown in Fig. 5(b), the catalyst test piece 200b includes a catalyst sample 206, which comprises an NOx storage function and a catalyst function, inside a quartz tube 202. The catalyst sample 206 was created by performing the procedure described below.

(Creating Procedure of Catalyst sample 204)

First, $\gamma$-$Al_2O_3$ was dispersed in ion-exchange water. An aqueous solution of barium acetate was then added in it. The resulting mixture heated to remove water from it, dried at 120 degrees Celsius, and pulverized to powder. The powder was then burned for two hours at 500 degrees Celsius. After firing, the burnt powder was immersed in a solution containing ammonium hydrogen carbonate, and then dried at 250 degree Celsius. As a result of that, barium-supported catalyst was obtained.

Next, the barium-supported catalyst was dispersed in ion-exchange water. An aqueous solution containing dinitro-diammine platinum was then added to support Pt. The resulting mixture was dried, pulverized, and burned for one hour at 450 degrees Celsius. According to this catalyst, the supported quantity of barium was 0.1 mole per 120 g of $\gamma$-$Al_2O_3$, and the supported quantity of Pt was 2 g.

A 30 mm diameter, 50 mm long, 4 mil/400 cpsi cordierite honeycomb was coated with the catalyst being prepared earlier and burned for one hour at 450 degrees Celsius. The coating amount was such that $Al_2O_3$ was coated at a rate of 120 g/L.

[Experiment Conditions]

Following experiment conditions are used for the present evaluation test.

Temperature: control a temperature in the range 30 degrees Celsius - 500 degrees Celsius
Temperature rise rate: 10 degrees Celsius /min.
Simulant gas compositions:

stoichiometric compositions
$C_3H_6$ (1000 ppm = 3000ppmC)

CO (6500 ppm)
NO (1500 ppm)
$O_2$ (7000 ppm)
$CO_2$ (10%)
$H_2O$ (3%)
Remainder $N_2$

Simulant gas flow rate: 30 L/Min.
Injection gas compositions:

03 ((30000ppm)
Remainder $N_2$

Injection gas flow rate: 6 L/min.

[Test Method]

The electrical furnace being placed around the catalyst test piece 200 was controlled so that its temperature might be raised from low-temperature side. The injection gas was injected when the temperature was in the range of 30 degrees Celsius - 300 degrees Celsius. Moreover, when the temperature was 300 degrees or higher, only simulant gas was injected without supplying the injection gas. The experiments was performed both the first experiment being used the catalyst sample 204 and the second experiment being used the catalyst sample 206. An exhaust gas purification efficiency was calculated as a percentage by subtracting the amount of NOx being emitted into downstream from the catalyst test piece 200 (hereinafter referred to as an "NOx outlet flow") from the amount of NOx being introduced into the catalyst test piece 200 (hereinafter referred to as an "NOx inlet flow") within the test time and then being divided by the NOx inlet flow within the test time.

$$\text{NOx inlet flow} = \text{NOx concentration of simulant gas} \times \text{simulant gas flow rate} \times \text{test time} \quad\text{---}\quad (4)$$

$$\text{NOx outlet flow} = \text{NOx concentration of downstream from the catalyst 200} \times \text{gas flow rate (simulant gas and injection gas)} \times \text{test time} \quad\text{---}\quad (5)$$

$$\text{purification efficiency} = (\text{NOx inlet flow} - \text{NOx outet flow}) / \text{NOx inlet flow} \times 100 \quad\text{---}\quad (6)$$

[Results of Test]

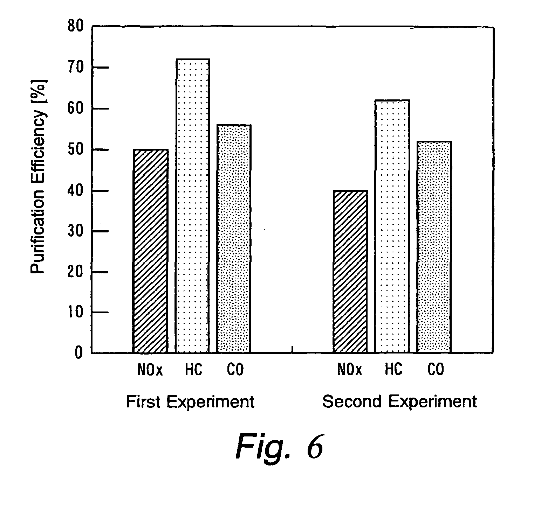

Fig. 6 is a graph illustrating the purification efficiencies for a few kinds of components in the first and the second experiments. As shown in Fig. 6, it indicates that the catalyst test piece being used for the first experiment exhibited higher purification efficiencies for NOx, HC, and CO. The aforementioned results indicate an advantage by adding the HC adsorbent to the NSR catalyst.

[Characteristic Configuration]

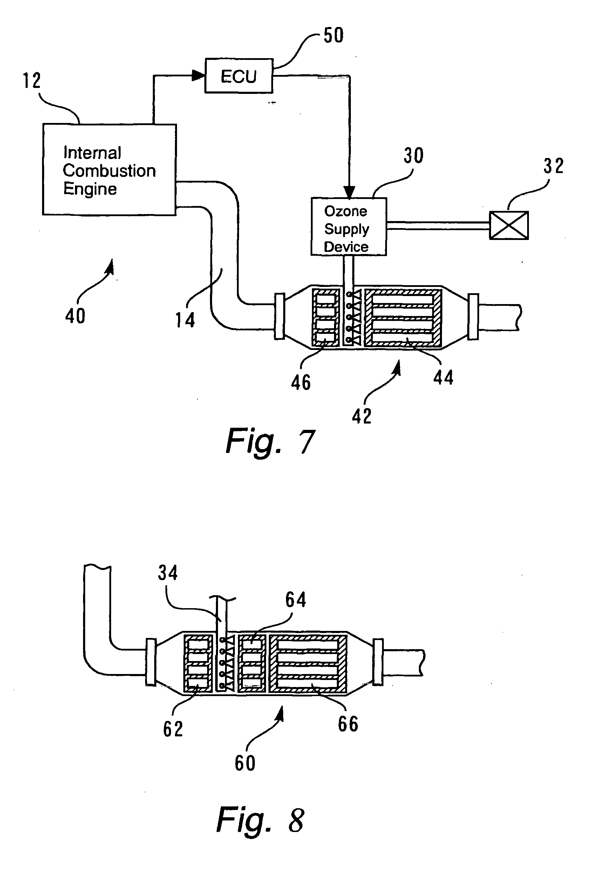

Next, a second example will now be described with reference to Fig. 7. Fig. 7 is a diagram illustrating the hardware configuration of the second example. Elements in the exhaust emission control apparatus 40 shown in Fig. 7 that are common with those in the exhaust emission control apparatus 10 shown in Fig. 1 are designated by the same reference numerals, and redundant description thereof will be omitted.

As shown in Fig. 7, an exhaust purification apparatus 40 includes an exhaust purification catalyst 42 which is installed in the exhaust path 14. An NSR catalyst 44, in which platinum (Pt) as noble metal and barium carbonate ($BaCO_3$) are supported by the ceramic carrier, is placed in the exhaust purification catalyst 42. Pt functions as an active site which activates the oxidation reaction of CO, HC and others or the reduction reaction of NOx. Further, $BaCO_3$ functions as an NOx storage substance which stores NOx in the form of nitrate.

An HC adsorbent 46, in which zeolite based ZSM-5 is supported by a ceramic carrier, is placed in the exhaust purification catalyst 42 upstream from the NSR catalyst 44. The ZSM-5 functions as an HC adsorbent which adsorbs HC.

The exhaust emission control apparatus 40 includes an ozone supply device 30. The ozone supply device 30 includes an ozone injection orifice 34. The ozone injection orifice 34 is placed upstream from the NSR catalyst 44 and downstream from the HC adsorbent 46, and injecting ozone toward the NSR catalyst 44.

[Characteristic Operation]

In the exhaust emission control apparatus 10, it is assumed that the exhaust purification catalyst 20 in which the HC adsorbent, the NOx storage substance and the noble metal are supported on the common carrier is provided so that the NOx exhausted during a cold startup of the engine 12 is effectively stored in order to be prevented from being emitted into the atmosphere. However, according to the aforementioned configurations, the ozone is also injected into the HC adsorbent which is placed inside of the exhaust purification catalyst 20. Therefore, the injected ozone may react not only with the NOx but also with the HC adsorbed in the HC adsorbent, thereby decreasing an oxidized rate of NOx.

In view of the above circumstances, the second example uses the exhaust purification catalyst 42, in which the HC adsorbent is separated from the NOx retention material. In the exhaust purification catalyst 42, the introduced ozone is effectively prevented from reacting with the HC adsorbed in the HC adsorbent 46 since the HC adsorbent 46 is positioned upstream from the ozone injection orifice as shown in Fig. 7. Therefore, the HC adsorbed in the HC adsorbent 46 can be certainly supplied to the NSR catalyst 44, thereby efficiently improving the NOx purification capability.

Further, according to the exhaust purification catalyst 42, since the NSR catalyst 44 is positioned downstream from the ozone injection orifice 34, all of the injected ozone is used for reacting with NOx. Therefore, it is possible to improve the oxidation rate of NOx and increase the storage amount of NOx.

Although the NSR catalyst 44 in which the noble metal Pt and $BaCO_3$ functioning as an NOx storage substance are supported by the common ceramic carrier is used, the configuration of the NSR catalyst 44 is not limited to this. For example, according to the gas-phase reaction of the above formulas (1) and (2), the region for oxidizing the NOx is not limited to a region on catalyst. Thus, it becomes possible, for instance, to support the NOx storage substance and noble metal separately in the NSR catalyst 44. More concretely, the NOx storage substance and the noble metal may be supported separately, for instance, at the upstream side and the downstream side of the carrier, respectively.

Fig. 8 is a diagram illustrating an internal configuration of an exhaust purification catalyst 60 which is able to be applied as modifications of the exhaust purification catalyst 42. As shown in Fig. 8, an HC adsorbent 62 is installed inside of an exhaust purification catalyst 60. Further, an NOx retention material 64 is installed downstream from the HC adsorbent 62. Furthermore, a three-way catalyst 66 is installed downstream from the NOx retention material. Furthermore, the ozone injection orifice 34 is installed upstream from the NOx retention material 64 and downstream from the HC adsorbent 62. The ozone injection orifice 34 injects the ozone toward the NOx retention material 64.

According to the aforementioned configurations, it is possible to improve the purification performance of the catalyst since the three-way catalyst in which the noble metal is supported and the NOx retention material 64 in which the NOx storage substance that can be a catalyst poison is supported are installed separately. Further, the NOx that is not stored by the NOx retention material 64 can be purified in the three-way catalyst 66 after the catalyst is activated for some extent since the three-way catalyst 66 is positioned downstream from the NOx retention material 64, whereby the NOx purification performance is improved.

Further, the interior configuration of the NSR catalyst 44 is not limited to the configuration in which the NOx storage substance and the noble metal are supported separately at the upstream side and the downstream side of the carrier; a configuration in which an upper layer side and a lower layer side are used for supporting them separately can be also used as the interior configuration. It should be noted that, in a case where the layered configuration is employed, it is preferable that the noble metal is arranged as the upper layer on the NOx storage substance so that the NOx desorbed from the NOx storage substance is reduced by the noble metal.

Although the exhaust purification catalyst 42 that has the HC adsorbent 46 and the NSR catalyst 44 therein is used in the above described second example, the configuration of the catalyst is not limited to this. For example, the HC adsorbent 46 and the NSR catalyst 44 may be installed into the exhaust path 14 respectively without combining them into a single unit. Further, in this case, the various kinds of configurations can be taken as the ozone supply device 30. For instance, in order to add ozone to the exhaust gas which is flown into the NSR catalyst 44, an ozone generation device may be installed in the exhaust path 14 or the ozone may be injected from the ozone supply device 30 into a certain part of the exhaust path 14 which is positioned downstream from the HC adsorbent 46 and upstream from the NSR catalyst 44.

Further, although $BaCO_3$ is used as the NOx storage substance, the material of the NOx storage substance is not limited to this. For example, alkali metals, such as Na, K, Cs and Rb, alkali earth metals such as Ba, Ca and Sr, and rare earth elements such as Y, Ce, La and Pr may be used as needed. Further, the material of the catalyst is not limited to Pt. For example, noble metals such as Rh and Pd may be used as needed. Furthermore, the material of the HC adsorbent is not limited to ZSM-5. For example, various publicly known substances for adsorbing HC may be used as needed.

It should be noted that in the above described second example, the ozone supply device 30 corresponds to the "ozone supply means"; and the exhaust purification catalyst 42 corresponds to the "catalyst".

Evaluation test

[Configuration of Experiment]

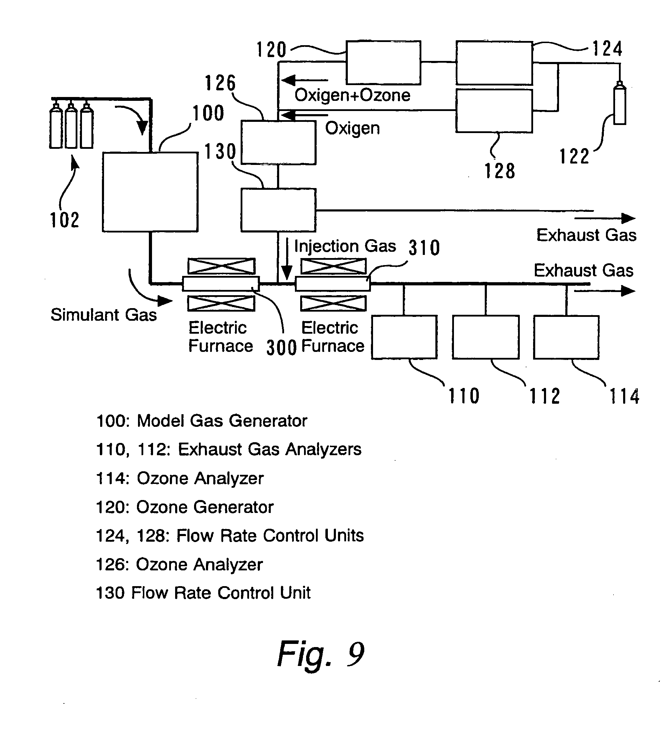

Next, evaluation test for confirming the advantage of the second example will now be described with reference to Figs. 9 to 11. Fig. 9 is a diagram illustrating the hardware configuration of the experiment of the present evaluation test. Like elements between the experiment shown in Fig. 9 and the experiment shown in Fig. 4 are designated by the same reference numerals and will not be redundantly described.

As shown in Fig. 9, a catalyst test piece 300 is installed downstream from the model gas generator 100. Further, a catalyst test piece 310 is installed downstream from the catalyst test piece 300. The ozone generator 120 is installed upstream from the catalyst test piece 300 and downstream from the catalyst test piece 310 via the ozone analyzer 126 and the flow rate control unit 128.

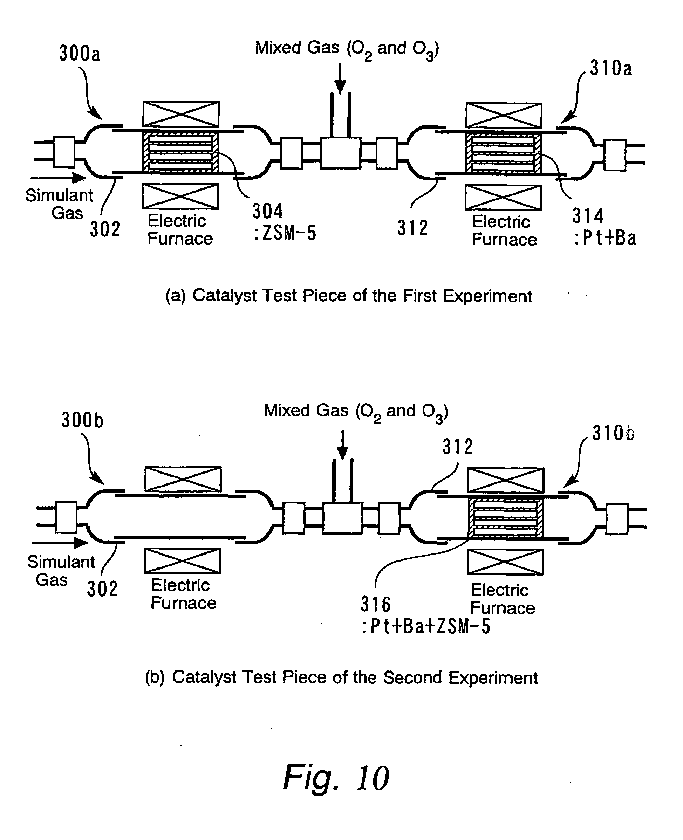

Next, concrete configurations of the catalyst test pieces 300, 310 will now be described in detail. Fig. 10 is a cross-sectional view illustrating the inside of the catalyst test pieces 300, 310 of the present experiment. According to the present evaluation test, the catalyst test pieces 300a and 310b were used in a first experiment, and the catalyst test pieces 300b and 310b were used in a second experiment. Fig. 10(a) is cross-section diagrams illustrating the inside of the catalyst test pieces 300a and 310a being used in the first experiment. As shown in Fig. 9(a), the catalyst test piece 300a includes a catalyst sample 304 comprising an HC adsorbing function inside of a quartz tube 302. Further, the catalyst test piece 310a includes a catalyst sample 314 comprising an HC adsorbing function inside of a quartz tube 312. The catalyst samples 304 and 314 were created by performing the procedure described below.

(Creating procedure of catalyst sample 306)

First, $H^+$ ion of ZSM-5 type zeolite (Si/Al ratio = 40, H-type) was exchanged ion using silver nitrate, dried, and then burned at 450 degrees Celsius to prepare Ag ion-exchange ZSM-5. Next, A 30 mm diameter, 50 mm long, 4 mil/400 cpsi cordierite honeycomb was coated with the catalyst being prepared earlier and burned for one hour at 450 degrees Celsius. The coating amount was 50 g/L.

(Creating procedure of catalyst sample 314)

First, $\gamma$-$Al_2O_3$ was dispersed in ion-exchange water. An aqueous solution of barium acetate was then added in it. The resulting mixture heated to remove water from it, dried at 120 degrees Celsius, and pulverized to powder. The powder was then burned for two hours at 500 degrees Celsius. After burning, the burnt powder was immersed in a solution containing ammonium hydrogen carbonate, and then dried at 250 degree Celsius. As a result of that, barium-supported catalyst was obtained.

Next, the barium-supported catalyst was dispersed in ion-exchange water. An aqueous solution containing dinitro-diammine platinum was then added to support Pt. The resulting mixture was dried, pulverized, and burned for one hour at 450 degrees Celsius. According to this catalyst, the supported quantity of barium was 0.1 mole per 120 g of $\gamma$-$Al_2O_3$, and the supported quantity of Pt was 2 g.

A 30 mm diameter, 50 mm long, 4 mil/400 cpsi cordierite honeycomb was coated with the catalyst being prepared earlier and burned for one hour at 450 degrees Celsius. The coating amount of $Al_2O_3$ was 120 g/L.

[Experiment Conditions]

Following experiment conditions are used for the present evaluation test.

Temperature: control a temperature in the range 30 degrees Celsius - 500 degrees Celsius
Temperature rise rate: 10 degrees Celsius /min.
Simulant gas compositions:

stoichiometric compositions
$C_3H_6$ (1000 ppm = 3000ppmC)
CO (6500 ppm)
NO (1500 ppm)
$O_2$ (7000 ppm)
$CO_2$ (10%)
$H_2O$ (3%)
Remainder $N_2$

Simulant gas flow rate: 30 L/Min.
Injection gas compositions:

03 ((30000ppm)
Remainder $N_2$

Injection gas flow rate: 6 L/min.

[Test Method]

The electrical furnaces which are placed around the catalyst test pieces 300 and 310 were controlled so that its temperature might be raised from low-temperature side. The injection gas was injected when the temperature was in the range of 30 degrees Celsius - 300 degrees Celsius. Moreover, when the temperature was 300 degrees or higher, only simulant gas was injected without supplying the injection gas. The experiments were performed both the first experiment being used the catalyst samples 304, 314 and the second experiment being used the catalyst sample 306. An exhaust gas purification efficiency was calculated by using above formula (5).

[Results of Test]

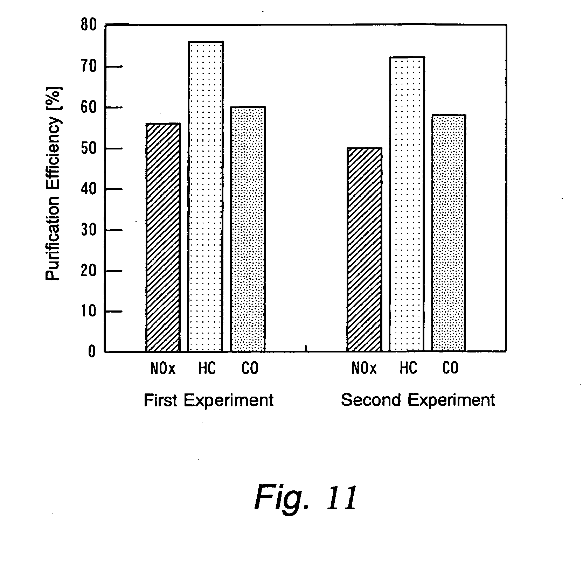

Fig. 11 is a graph illustrating the purification efficiencies for a few kinds of components according to the first and the second experiments. As shown in Fig. 11, it indicates that the catalyst test piece being used for the first experiment exhibited higher purification efficiencies for NOx, HC, and CO. The aforementioned results indicate an advantage by installing the HC adsorbent upstream from ozone injection orifice.

**Claims**

1. An exhaust emission control apparatus being placed in an exhaust path (14) of an internal combustion engine (12), comprising:

   an NOx retention material (44, 64);
   ozone injection means (30) for injecting ozone into an exhaust gas being positioned upstream from the NOx retention material (44, 64); and a catalyst; **characterised in that** an HC adsorbent (46, 62), is positioned upstream from the NOx retention material (44, 64), adsorbing HC contained in the exhaust gas;
   said HC adsorbent (46, 62) is prepared so as to desorb adsorbed HC at the same time as NOx being stored in the NOx retention material (44, 64) is desorbed; said ozone injection means being positioned downstream from the HC adsorbent (46, 62); and said catalyst (44, 66) is placed in a region where desorbed NOx and desorbed HC contact each other.

2. The exhaust emission control apparatus according to claim 1, wherein the NOx retention material (64) is separated from the catalyst (66), and
   wherein the NOx retention material (64) is positioned upstream from the catalyst (66).

3. The exhaust emission control apparatus according to claim 1, wherein the NOx retention material (44) is combined with the catalyst (44).

**4.** The exhaust emission control apparatus according to anyone of claims 1 to 3, further comprising:

control means for controlling the ozone injection means (30) so that a molar quantity of ozone to be injected into the exhaust gas becomes greater than a molar quantity of nitrogen monoxide contained in the exhaust gas.

**5.** The exhaust emission control apparatus according to claim 4, wherein the control means controls the ozone injection means (30) so that the molar quantity of ozone to be injected into the exhaust gas becomes at least two times the molar quantity of nitrogen monoxide contained in the exhaust gas.

**Patentansprüche**

**1.** Eine Abgassteuerungsvorrichtung, die in einem Abgasweg (14) eines Brennkraftmotors positioniert ist, mit:

einem NOx Rückhaltematerial (44, 64);
Ozoninjektionsmitteln (30), zum Injizieren von Ozon in ein Abgas hinein, die dem NOx Rückhaltematerial (44, 64) vorgelagert positioniert sind; und
einem Katalysator; **dadurch gekennzeichnet, dass**
ein Kohlenwasserstoffadsorbens (46, 62) dem NOx Rückhaltematerial (44, 64) stromaufwärts positioniert ist, das Kohlenwasserstoff adsorbiert, der in den Abgasen enthalten ist;
das Kohlenwasserstoffadsorbens (46, 62) vorbereitet ist, um adsorbierten Kohlenwasserstoff zur selben Zeit zu desorbieren, zu der das in dem NOx Rückhaltematerial (44, 64) gespeicherte NOx desorbiert wird;
die Ozoninjektionsmittel dem Kohlenwasserstoffadsorbens (46, 62) stromabwärts positioniert sind; und
der Katalysator (44, 66) in einem Bereich positioniert ist, wo desorbiertes NOx und desorbierter Kohlenwasserstoff miteinander in Kontakt treten.

**2.** Die Abgassteuerungsvorrichtung nach Anspruch 1, wobei das NOx Rückhaltematerial (64) von dem Katalysator (66) getrennt ist und
wobei das NOx Rückhaltematerial (64) dem Katalysator (66) stromaufwärts positioniert ist.

**3.** Die Abgassteuerungsvorrichtung nach Anspruch 1, wobei das NOx Rückhaltematerial (44) mit dem Katalysator (44) kombiniert ist.

**4.** Die Abgassteuerungsvorrichtung nach einem der Ansprüche 1 bis 3, ferner mit:

Steuerungsmitteln zum Steuern der Ozoninjektionsmittel (30), so dass eine molare Menge des in das Abgas zu injizierenden Ozons größer wird als eine molare Menge des Stickstoffmonoxids, das in dem Abgas enthalten ist.

**5.** Die Abgassteuerungsvorrichtung nach Anspruch 4, wobei die Steuerungsmittel die Ozoninjektionsmittel (30) derart steuern, dass die molare Menge des in das Abgas zu injizierenden Ozons mindestens zweimal so groß wird wie die molare Menge des Stickstoffmonoxids, das in dem Abgas enthalten ist.

**Revendications**

**1.** Appareil de contrôle d'émission d'échappement qui est placé dans une trajectoire d'échappement (14) d'un moteur à combustion interne (12), comprenant :

un matériau de retenue de NOx (oxyde d'azote) (44, 64) ;
des moyens d'injection d'ozone (30) pour injecter de l'ozone dans un gaz d'échappement qui sont positionnés en amont du matériau de retenue de NOx (44, 64) ; et
un catalyseur ;
**caractérisé en ce qu'**un adsorbant de HC (hydrocarbure) (46, 62) est positionné en amont du matériau de retenue de NOx (44, 64), adsorbant le HC contenu dans le gaz d'échappement ;
ledit adsorbant de HC (46, 62) est préparé afin de désorber le HC adsorbé en même temps que le NOx qui est stocké dans le matériau de retenue de NOx (44, 64) est désorbé ; lesdits moyens d'injection d'ozone étant positionnés en aval de l'adsorbant de HC (46, 62) ; et ledit catalyseur (44, 66) est placé dans une région dans laquelle le NOx désorbé et le HC désorbé sont en contact entre eux.

2. Appareil de contrôle d'émission d'échappement selon la revendication 1, dans lequel le matériau de retenue de NOx (64) est séparé du catalyseur (66), et
dans lequel le matériau de retenue de NOx (64) est positionné en amont du catalyseur (66).

3. Appareil de contrôle d'émission d'échappement selon la revendication 1, dans lequel le matériau de retenue de NOx (44) est combiné avec le catalyseur (44).

4. Appareil de contrôle d'émission d'échappement selon l'une quelconque des revendications 1 à 3, comprenant en outre :

des moyens de contrôle pour contrôler les moyens d'injection d'ozone (30) de sorte qu'une quantité molaire d'ozone à injecter dans le gaz d'échappement devient supérieure à une quantité molaire de monoxyde d'azote contenu dans le gaz d'échappement.

5. Appareil de contrôle d'émission d'échappement selon la revendication 4, dans lequel les moyens de contrôle contrôlent les moyens d'injection d'ozone (30) de sorte que la quantité molaire d'ozone à injecter dans le gaz d'échappement représente au moins deux fois la quantité molaire de monoxyde d'azote contenu dans le gaz d'échappement.

Fig. 1

Low-Temperature
(Before catalyst activates)

## Fig. 2

High-Temperature
(After catalyst activates)

## Fig. 3

100: Model Gas Generator

110, 112: Exhaust Gas Analyzers

114: Ozone Analyzer

120: Ozone Generator

124, 128: Flow Rate Control Units

126: Ozone Analyzer

130 Flow Rate Control Unit

*Fig. 4*

Mixed Gas (O$_2$ and O$_3$)

Simulant Gas

200a

204
:Pt+Ba+ZSM-5

202   Electric
Furnace

(a) Catalyst Test Piece of the First Experiment

Mixed Gas (O$_2$ and O$_3$)

Simulant Gas

200b

206
:Pt+Ba

202   Electric
Furnace

(b) Catalyst Test Piece of the Second Experiment

*Fig. 5*

*Fig. 6*

Fig. 7

Fig. 8

100: Model Gas Generator

110, 112: Exhaust Gas Analyzers

114: Ozone Analyzer

120: Ozone Generator

124, 128: Flow Rate Control Units

126: Ozone Analyzer

130 Flow Rate Control Unit

## Fig. 9

(a) Catalyst Test Piece of the First Experiment

(b) Catalyst Test Piece of the Second Experiment

*Fig. 10*

*Fig. 11*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002089246 A
- JP 6185343 A
- JP 10169434 A
- EP 1712752 A